Europäisches Patentamt

European Patent Office

Office européen des brevets

(19)

(11) Veröffentlichungsnummer : **0 151 330**
**B1**

(12)                    **EUROPÄISCHE PATENTSCHRIFT**

(45) Veröffentlichungstag der Patentschrift :
30.08.89

(21) Anmeldenummer : 84201960.6

(22) Anmeldetag : 22.12.84

(51) Int. Cl.⁴ : **F 16 K 11/07, F 16 K 27/04**

(54) **Wegeventil.**

(30) Priorität : 06.02.84 DE 8403370 U

(43) Veröffentlichungstag der Anmeldung :
14.08.85 Patentblatt 85/33

(45) Bekanntmachung des Hinweises auf die Patenterteilung : 30.08.89 Patentblatt 89/35

(84) Benannte Vertragsstaaten :
CH DE FR GB IT LI SE

(56) Entgegenhaltungen :
WO—A—83/034 55
US—A— 2 765 808
US—A— 2 993 511
US—A— 3 352 394
US—A— 3 457 952

(73) Patentinhaber : ROBERT BOSCH GMBH
Postfach 50
D-7000 Stuttgart 1 (DE)

(72) Erfinder : Frötschl, Erwin
Kirchstrasse 22
D-7014 Kornwestheim (DE)

## Beschreibung

### Stand der Technik

Die Erfindung geht aus von einem Wegeventil für Druckluftbetrieb nach der Gattung des Hauptanspruchs. Bei einem derartigen bekannten Wegeventil ist die Abluftdrossel in einem auf den Entlüftungsanschluß aufgeschraubten Stutzen angeordnet. Dadurch baut es groß und sperrig. Die Abluftdrossel ist nur eingeschraubt und kann sich so während des Betriebs z. B. durch Erschütterungen leicht herausdrehen.

Aus der Schrift US-A-2 765 808 ist ein Hydraulikventil bekannt, bei dem in einer Sacklochbohrung ein Drosselventil völlig eingeschraubt ist. Diese Drossel ist zwar verstellbar und versenkt in der Sacklochbohrung angeordnet, aber sie kann trotzdem bei starken Erschütterungen leicht herausfallen. Sie könnte nach dem Einbau zwar mit Hilfe z. B. eines Splints gesichert werden, wodurch die Drossel aber nicht mehr verstellbar ist.

Aus der Druckschrift WO-A-83/03455 ist ebenfalls ein solches Wegeventil bekannt. Dort sind die Verbraucher-, zulauf- und Ablaufanschlüsse als außermittige Sackbohrungen ausgebildet. Auch hier können Abluftdrosseln nur in die Öffnungen der Bohrungen eingeschraubt werden und müssen durch zusätzliche Mittel vor einem Herausdrehen gesichert werden. Sobald aber die Drosseln durch zusätzliche Maßnahmen gesichert werden, verlieren die Drosseln ihre Verstellbarkeit. Der Einbau und die Handhabung werden dadurch erschwert.

### Vorteile der Erfindung

Das erfindungsgemäße Wegeventil für Druckluftbetrieb mit den kennzeichnenden Merkmalen des Hauptanspruchs hat demgegenüber den Vorteil, daß es besonders einfach, kompakt und kostengünstig baut. Die Baugröße des Wegeventils verringert sich. Die Bewegung des steuerschiebers wird durch die Abluftdrossel nicht behindert. Die Einstellung der Abluftdrossel ist von der Verbraucherseite her möglich, wodurch das Wegeventil übersichtlich und auf einem Anschlußkörper anbaubar ist. Die Drossel ist nach dem Einbau unverlierbar in der Bohrung angeordnet, wobei die Verstellbarkeit der Drossel erhalten bleibt. Die Sicherung der Drossel in der Bohrung wird ohne zusätzliche Hilfsmittel erreicht. Es ergeben sich dadurch besonders günstige Anwendungsmöglichkeiten.

Durch die in den Unteransprüchen ausgeführten Maßnahmen sind vorteilhafte Weiterbildungen und Verbesserungen der im Hauptanspruch angegebenen Merkmale möglich.

### Zeichnung

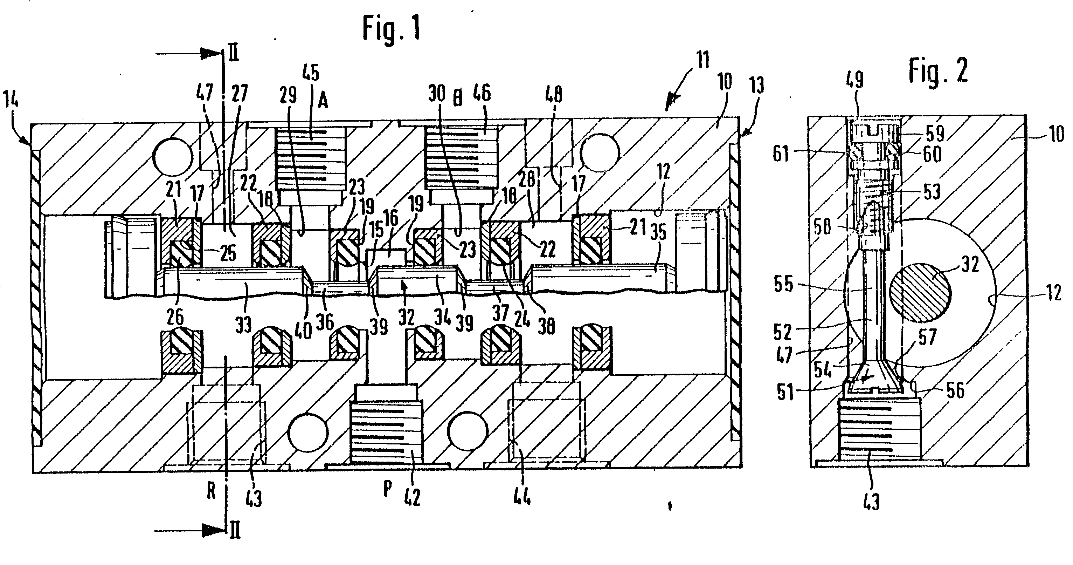

Ein Ausführungsbeispiel der Erfindung ist in der Zeichnung dargestellt und in der nachfolgenden Beschreibung näher erläutert. Es zeigen Figur 1 einen Längsschnitt durch ein Wegeventil und Figur 2 einen Schnitt in Richtung II-II nach Figur 1.

### Beschreibung des Ausführungsbeispiels

Im Gehäuse 10 eines 5/2-Wegeventils 11, das als Druckluftventil eingesetzt wird, ist eine mittige, durchgehende Stufenbohrung 12 ausgebildet. Diese ist von beiden Stirnseiten 13, 14 des Gehäuses 10 her jeweils dreifach abgesetzt und hat einen mittigen Abschnitt 15 mit dem kleinsten Durchmesser. In diesem Abschnitt 15 ist eine Ringnut 16 ausgebildet, die als Zulaufkammer dient. An die Schultern 17, 18, 19 der Stufenbohrung 12 legen sich beiderseits des Abschnitts 15 Führungsscheiben 21, 22, 23 an. Diese sind an den Schultern 17, 18, 19 angeklebt und weisen je eine gleich große, mittige Bohrung 24 auf. In den Bohrungen 24 der Führungsscheiben 21, 22, 23 sind jeweils in Ringnuten 25 Dichtringe 26 angeordnet. Die zwischen den Führungsscheiben 21, 22, 23 gebildeten Räume dienen als Steuerkammern 27, 28 und als Verbraucherkammern 29, 30.

In den Bohrungen 24 der Führungsscheiben 21, 22, 23 ist ein Steuerschieber 32 dicht gleitend geführt. Dieser weist drei Bunde 33, 34, 35 auf, die durch am Steuerschieber 32 ausgebildete Ringnuten 36, 37 getrennt sind. An den Bunden 33, 34, 35 befinden sich den Ringnuten 36, 37 zugewandte Steuerkanten 38, 39, 40.

Das Gehäuse 10 hat an seiner Unterseite, die einer in Figur 1 nicht dargestellten Anschlußplatte zugewandt ist, einen Zulaufanschluß 42, der in Verbindung mit der Zulaufkammer 16 steht, und zwei mit den Steuerkammern 27, 28 verbundenen Entlüftungsanschlüssen 43, 44. An der Oberseite des Gehäuses 10 sind zwei Verbraucheranschlüsse 45, 46 ausgebildet, die mit den Verbraucherkammern 29, 30 verbunden sind.

Der Zulaufanschluß 42 und die Verbraucheranschlüsse 45, 46 sind in einer ersten Ebene angeordnet, in der auch die Achse der Stufenbohrung 12 verläuft. In einer zweiten Ebene, die parallel zur ersten Ebene verläuft, befinden sich die Entlüftungsanschlüsse 43, 44. Diese sind jeweils an einer durchgehenden, quer zur Stufenbohrung 12 verlaufenden Längsbohrung 47, 48 ausgebildet. Sie schneiden die Stufenbohrung 12 außermittig und haben einen kleineren Durchmesser als die Entlüftungsanschlüsse 43, 44. An den den Entlüftungsanschlüssen 43, 44 abgewandten Enden haben sie einen Abschnitt 49 mit einem mittleren Durchmesser.

In der Längsbohrung 47 ist — wie in Figur 2 näher gezeigt — eine Abluftdrossel 51 angeordnet, die nicht über das Gehäuse 10 hinausragt. Die Abluftdrossel 51 besteht aus einer Drosselschraube 52 und einer Stellschraube 53. Die Drosselschraube 52 hat einen konisch zulaufenden Kopf 54 und einen langen, zylindrischen Schaft 55, der nur so dick ist, daß er die Bewegung des Steuerschiebers 32 nicht behindert. Der Kopf 54 bildet vom Entlüftungsanschluß 43 her gesehen mit einer zwischen Entlüftungsanschluß 43 und Längsbohrung 47 gebildeten Schulter 56 einen einstellbaren Drosselspalt 57. Die Drosselschraube 52 ist in einer Sackbohrung 58 der Stellschraube 53 eingeschraubt und dort vorteilhafterweise verklebt, wodurch eine feste Verbindung gewährleistet ist. Die Stellschraube 53 selbst ist mit Hilfe eines Außengewindes in die Längsbohrung 47 eingeschraubt. Ihr Kopf 59, der sich im Abschnitt 49 befindet, hat eine Ringnut 60, in der ein Dichtring 61 angeordnet ist und so die Längsbohrung 47 nach außen hin abdichtet. Die Vorspannung des Dichtrings 61 ist so gewählt, daß er die Drosselschraube 52 in der Längsbohrung 47 festhält. Dieselbe Abluftdrossel 51 ist auch im der Längsbohrung 48 angeordnet.

Die Funktionsweise des Wegeventils 11 ist hinreichend bekannt und deshalb hier nicht näher erläutert. Mit Hilfe der Drosselschraube 52 ist die zum Entlüftungsanschluß strömende Druckluftmenge im Drosselspalt 57 drosselbar. Durch die Stellschraube 53 ist die Drosselschraube 52 jedesmal — auch wenn das Wegeventil 11 bereits auf einem Anschlußkörper befestigt ist — einstellbar.

Vorteilhafterweise ist die Längsbohrung, in der die Abluftdrossel 51 angeordnet ist, nur soweit außermittig angeordnet, daß der Schaft 55 der Drosselschraube 52 die Bewegung des Steuerschiebers 32 gerade nicht mehr behindert. Die Abluftdrossel 51 hat den Vorteil, daß sie nach der Montage auch bei starken Erschütterungen im Betrieb nicht mehr aus der Längsbohrung 47 herausfallen kann. Die Abluftdrossel 51 ist somit unverlierbar.

**Patentansprüche**

1. Wegeventil (11) für Druckluftbetrieb, mit einem Ventilgehäuse (10), in dem ein Steuerschieber (32) angeordnet ist, der Druckmittel von wenigstens einer zulaufkammer (16) zu mehreren Steuerkammern (27, 28) und mehreren Verbraucherkammern (29, 30) steuert, und in dem weiterhin in Entlüftungsanschlüssen (43, 44) Abluftdrosseln (51) angeordnet sind, dadurch gekennzeichnet, daß zum Einbau der Abluftdrosseln (51) im Ventilgehäuse (10) etwa quer zur Schieberbohrung (12) verlaufende, durchgehende und die Schieberbohrung (12) außermittig schneidende Bohrungen (47, 48) ausgebildet sind, daß die Abluftdrosseln (51) aus mindestens einer Drosselschraube (52) und einer mit dieser nach einem von den beiden Öffnungen der jeweiligen Bohrungen (47, 48) her separat vorgenommenen Einbau fest verbundenen Stellschraube (53) bestehen und daß die Drosselschraube (52) in einer Öffnung der Bohrungen (47, 48) und die Stellschraube (53) in der anderen Öffnung der Bohrungen (47, 48) angeordnet ist.

2. Ventil nach Anspruch 1, dadurch gekennzeichnet, daß die Abluftdrosseln (51) in den Bohrungen (47, 48) versenkt angeordnet sind.

3. Ventil nach Anspruch 1 und/oder 2, dadurch gekennzeichnet, daß die Drosselschraube (52) und die Stellschraube (53) miteinander verklebt sind.

4. Ventil nach einem der Ansprüche 1 bis 3, dadurch gekennzeichnet, daß das Ventilgehäuse (10) auf einem Anschlußkörper angeordnet ist.

5. Ventil nach einem der Ansprüche 1 bis 4, dadurch gekennzeichnet, daß die Drosselschraube (52) zum Anschlußkörper hin geöffnet ist.

**Claims**

1. Multiple-way valve (11) for pressurized air operation, having a valve housing (10) in which a control slide valve (32) is arranged which controls pressurized medium from at least one inlet chamber (16) to a plurality of control chambers (27, 28) and a plurality of consumer chambers (29, 30), and in which exhaust air throttles (51) are also arranged in venting connections (43, 44), characterized in that, in order to install the exhaust air throttles (51), continuous bores (47, 48) oriented somewhat transversely to the slide valve bore (12) and intersecting the slide valve bore (12) eccentrically are constructed in the valve housing (10), that the exhaust air throttles (51) comprise at least one throttle screw (52) and a set screw (53) firmly connected thereto after an installation performed separately from the direction of both orifices of the respective bores (47, 48), and that the throttle screw (52) is arranged in an orifice of the bores (47, 48) and the set screw (53) in the other orifice of the bores (47, 48).

2. Valve according to Claim 1, characterized in that the exhaust air throttles (51) are arranged sunk in the bores (47, 48).

3. Valve according to Claim 1 and/or 2, characterized in that the throttle screw (52) and the set screw (53) are bonded together.

4. Valve according to one of Claims 1 to 3, characterized in that the valve housing (10) is arranged on a connection element.

5. Valve according to one of Claims 1 to 4, characterized in that the throttle screw (52) is open towards the connection element.

**Revendications**

1. Soupape à voies multiples (11) pour un fonctionnement à l'air comprimé, avec un carter de soupape (10) dans lequel est disposé un tiroir de commande (32) commandant le milieu sous pression provenant d'au moins une chambre d'alimentation (16) vers plusieurs chambres de commande (27, 28) et plusieurs chambres de consommateurs (29, 30), et des étranglements d'air d'échappement (51) étant en outre disposés dans des raccordements d'aération, caractérisée en ce que des alésages (47, 48) s'étendant dans le carter de soupape (10) à peu près transversalement à l'alésage de tiroir (12), traversants et coupant de manière excentrée l'alésage de tiroir (12), sont réalisés pour monter les étranglements d'air d'échappement (51), en ce que les étranglements d"air d'échappement (51) se composent d'au moins une vis d'étranglement (52) et d'une vis de réglage (53) rigidement relié à celle-ci après un montage entrepris séparément depuis les deux ouvertures de chacun des alésages (47, 48), et en ce que la vis d'étranglement (52) est disposée dans une ouverture des alésages (47, 48) et la vis de réglage (53) dans l'autre ouverture des alésages (47, 48).

2. Soupape selon la revendication 1, caractérisée en ce que les étranglements d'air d'échappement (51) sont disposés noyés dans les alésages (47, 48).

3. Soupape selon la revendication 1 ou 2, caractérisée en ce que la vis d'étranglement (52) et la vis de réglage (53) sont collées ensemble.

4. Soupape selon l'une des revendications 1 à 3, caractérisée en ce que le carter de soupape (10) est disposé sur un corps de raccordement.

5. Soupape selon l'une des revendications 1 à 4, caractérisée en ce que la vis d'étranglement (52) est ouverte vers le corps de raccordement.

Fig. 1

Fig. 2